(19) Europäisches Patentamt
European Patent Office
Office européen des brevets

(11) Veröffentlichungsnummer: **0 027 852**
**B1**

(12) # EUROPÄISCHE PATENTSCHRIFT

(45) Veröffentlichungstag der Patentschrift: **09.11.83**

(51) Int. Cl.³: **C 08 G 69/36**

(21) Anmeldenummer: **80104048.6**

(22) Anmeldetag: **12.07.80**

(54) **Transparente Copolyamide und deren Verwendung zur Herstellung transparenter schlagzäher Formkörper.**

(30) Priorität: **12.09.79 DE 2936759**

(43) Veröffentlichungstag der Anmeldung: **06.05.81 Patentblatt 81/18**

(45) Bekanntmachung des Hinweises auf die Patenterteilung: **09.11.83 Patentblatt 83/45**

(84) Benannte Vertragsstaaten: **CH FR GB IT LI NL**

(56) Entgegenhaltungen:
**EP - A - 0 002 431**
**DE - A - 2 159 803**
**DE - A - 2 642 244**

(73) Patentinhaber: **CHEMISCHE WERKE HÜLS AG, Postfach 1320, D-4370 Marl 1 (DE)**

(72) Erfinder: **Rüter, Jörn, Dr., Dormagener Strasse 42, D-4370 Marl (DE)**

**EP 0 027 852 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Transparente Copolyamide und deren Verwendung zur Herstellung transparenter schlagzäher Formkörper

Die Erfindung betrifft Copolyamide aus Terephthalsäure und/oder Isophthalsäure bzw. deren Estern oder esterbildenden Derivaten und Diamingemischen aus Isophorondiamin und Bis-(4-Aminocyclohexyl)-methan bzw. Derivaten davon sowie ω-Aminocarbonsäuren bzw. Lactamen mit mindestens 11 Kohlenstoffatomen. Copolyamide aus Lactamen, Dicarbonsäuren und Diamingemischen, in denen Isophorondiamin die eine Komponente darstellt, sind grundsätzlich bekannt. So beschreibt die FR-A-1 471 789 ein Copolyamid aus Aminoundecansäure, Terephthalsäure und einem Diamingemisch aus Isophorondiamin und Dodecamethylendiamin. Derartige Copolyamide können aber nicht befriedigen, da sie bereits bei Temperaturen um 70 bis 80° C erweichen und damit keine ausreichende Wärmeförmbeständigkeit aufweisen. Um diese zu erreichen, ist man nach dem Stand der Technik bestrebt, den Anteil an Lactamen bzw. Aminoundecansäure möglichst gering zu halten. So ist aus den GB-A-1 228 761, 1 266 864, 1 255 483, 1 410 006, 1 410 007 bekannt, daß dieser Anteil im Copolyamid nicht größer als 20 Mol-% betragen soll. Auf diese Weise ist es zwar möglich, transparente Copolyamide mit relativ hohen Glasübergangstemperaturen und damit guter Temperaturbeständigkeit zu erhalten, durch den geringen Lactam- bzw. Undecansäureanteil weisen diese aber sehr hohe Schmelzviskositäten auf, die eine Verarbeitung auf normalen Verarbeitungsmaschinen stark erschweren. Erhöht man aber in den, gemäß den genannten britischen Patentschriften erhaltenen, Copolyamiden den Lactamanteil auf >20 Mol-%, tritt ein sehr schneller Abfall der Glasübergangstemperatur ein (Vergleichsbeispiele A und B).

Auf der anderen Seite ist es bekannt, daß bei Verwendung von Isophorondiamin als einziger Diaminkomponente Copolyamide mit hohen Glasübergangstemperaturen resultieren. Copolyamide aus Terephthalsäure und/oder Isophthalsäure, Isophorondiamin als einziger Diaminkomponente und ω-Amino-carbonsäuren bzw. Lactamen mit mindestens 11 C-Atomen lassen sich aber nur zu Produkten mit niedrigen Molmassen kondensieren. Solche Produkte sind spröde und weisen keinerlei Schlagzähigkeit bzw. Kerbschlagzähigkeit auf (vgl. Beispiel C).

Die europäische Patentanmeldung 0 002 431 beschreibt transparente Polyamide und deren Verwendung zur Herstellung von Formkörpern durch Polykondensation von Lactamen bzw. entsprechenden Aminocarbonsäuren, aliphatischen und/oder aromatischen Dicarbonsäuren und Gemischen hydrierter Kondensationsprodukte aus Anilin und Formaldehyd. Das Diamingemisch kann bis zu 20 Gewichtsprozent Isophorondiamin enthalten. Somit enthalten die Polyamide gemäß der Entgegenhaltung maximal etwa 10 Gewichtsprozent Isophorondiamin. Demgegenüber enthalten die Polyamide mindestens 13 Gewichtsprozent Isophorondiamin. Gerade ein erhöhter Anteil an diesem Diamin führt jedoch im allgemeinen zu spröderen Produkten.

Dieser Stand der Technik kann zur Lösung der gestellten Aufgabe nicht beitragen, da er hinsichtlich des Isophoronanteils in entgegengesetzter Richtung führt. Es war nicht zu erwarten, daß man zu transparenten Polyamiden mit guter Verarbeitbarkeit gelangen könne, wenn der Isophoronanteil so stark erhöht würde, d. h. um mehr als 30 Gewichtsprozent. Schließlich hat dieser Stand der Technik nicht erkannt, daß neben den einzuhaltenden Mengenverhältnissen der Diamine auch aliphatische Dicarbonsäuren auszuschließen sind.

Aufgabe der Erfindung ist es daher, ein transparentes Copolyamid zu entwickeln, welches eine hohe Glasübergangstemperatur besitzt, dessen Anteil an Lactamen bzw. Aminocarbonsäuren mit mindestens 11 Kohlenstoffatomen >20 Mol-% ist und dessen Anteil an Isophorondiamin im Diamingemisch mindestens 50 Mol-% beträgt und das über ausgezeichnete mechanische Eigenschaften, ausgedrückt durch den Wert der Schlagzähigkeit bzw. Kerbschlagzähigkeit, verfügt.

Die Lösung der Aufgabe gelingt mit Hilfe von Copolyamiden bestehend aus

A) 25 bis 60 Mol-% mindestens einer ω-Amino-carbonsäure bzw. deren Lactamen mit mindestens 11 Kohlenstoffatomen und

B) 40 bis 75 Mol-% einer äquivalenten Mischung aus Terephthalsäure und/oder Isophthalsäure und einem Diamingemisch aus 80 bis 50 Mol-%, bezogen auf die Diamine, Isophorondiamin und 20 bis 50 Mol-% Diaminen der allgemeinen Formel

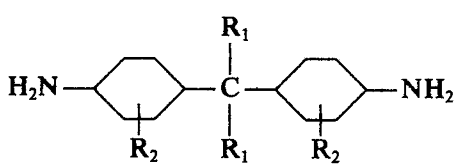

in der $R_1$ und $R_2$ Wasserstoffatome oder Alkylreste mit 1 bis 4 Kohlenstoffatomen darstellen, wobei die Summe A + B sich zu 100 Mol-% ergänzt.

Besonders vorteilhaft beträgt der Anteil an den Lactamen des Bestandteils A 30 bis 50 Mol-%. Geeignete Lactame bzw. ω-Aminocarbonsäuren mit mindestens 11 Kohlenstoffatomen sind

Aminoundecansäure, Laurinlactam, Aminododecansäure, vorzugsweise Laurinlactam.

Es können selbstverständlich auch Gemische dieser Verbindungen eingesetzt werden.

Unter Isophorondiamin wird ein Isomerengemisch des 3-Aminomethyl-3,5,5-trimethylcyclohexylamins verstanden. Es wird in Mengen von 50 bis 80 Mol-%, bezogen auf das Diamingemisch, eingesetzt.

Geeignete Diamine der angegebenen allgemeinen Formel sind z. B. Bis-(4-amino-cyclohexyl)-methan, Bis-(4-amino-3-methyl-cyclohexyl)-methan, 2,2-Bis-(4-amino-cyclohexyl)-propan oder 2,2-Bis-(4-amino-3-methyl-cyclohexyl)-propan. Besonders geeignet sind Bis-(4-amino-cyclohexyl)-methan und Bis-(4-amino-3-methyl-cyclohexyl)-methan.

Diese Diamine sind ebenfalls Isomerengemische, bestehend aus überwiegend trans-trans-, cis-trans- und zu einem geringen Anteil an cis-cis-Isomeren.

Für das erfindungsgemäße Verfahren werden die bei der Hydrierung der entsprechenden Bis-(4-amino-aryl)-alkane anfallenden Isomerengemische eingesetzt.

Die Diamine der allgemeinen Formel werden in Mengen von 20 bis 50 Mol-%, bezogen auf die Summe der Diamine, verwendet.

Die Herstellung der Copolyamide erfolgt nach dem üblichen Verfahren für Copolyamide. Üblicherweise geht man dabei so vor, daß das Gemisch der Ausgangskomponenten in Gegenwart von 10 bis 30 Gewichtsprozent Wasser in einem geschlossenen Autoklaven auf Temperaturen zwischen 190 und 230°C erhitzt wird, wobei eine Vorkondensation eintritt. Nach Beendigung dieser Vorkondensation wird die Temperatur auf 250 bis 300°C erhöht und nach Entspannen des Autoklaven unter Überleiten von Stickstoff zu Ende polykondensiert. Es ist möglich, diese Endphase der Polykondensation unter Anlegen von Vakuum durchzuführen; dies ist aber keinesfalls erforderlich.

Zur Beschleunigung der Polykondensationsreaktion werden zweckmäßigerweise saure Katalysatoren in Konzentrationen von 0,01 bis 1 Gewichtsprozent, bevorzugt 0,05 bis 0,5 Gewichtsprozent, bezogen auf die gesamte Mischung, eingesetzt. Die bevorzugten Katalysatoren sind Phosphorsäure und unterphosphorige Säure.

Es ist zweckmäßig, die gesamte Polykondensation unter Rühren durchzuführen, um eine homogene Durchmischung der einzelnen Komponenten zu gewährleisten und um den Abtransport des Kondensationswassers zu erleichtern.

Der Einsatz von Salzen aus den aromatischen Dicarbonsäuren und den einzelnen Komponenten des Diamingemisches ist möglich, aber nicht erforderlich; üblicherweise werden die freien Dicarbonsäuren und die freien Diamine eingesetzt.

Wegen der größeren Flüchtigkeit des Diamingemisches gegenüber den aromatischen Dicarbonsäuren hat es sich bewährt, einen kleinen Überschuß des Diamingemisches gegenüber dem Dicarbonsäureanteil einzusetzen. Üblicherweise wird ein Überschuß von ca. 0,5 bis 3 Mol-%, bezogen auf den Gesamtdiaminanteil, eingesetzt.

Das Molekulargewicht der erfindungsgemäßen Copolyamide kann in bekannter Weise durch Carbonsäuren oder Amine geregelt werden. Als Maßzahl für das Molekulargewicht wird die realtive Lösungsviskosität ($\eta_{rel}$) angegeben, die an einer 0,5%igen Lösung der erfindungsgemäßen Copolyamide in m-Kresol bei 25°C ermittelt wird. Der $\eta_{rel}$-Wert der erfindungsgemäßen Copolyamide sollte oberhalb 1,4, vorzugsweise zwischen 1,5 und 1,8, liegen.

Den erfindungsgemäßen Copolyamiden können übliche Zusätze, wie Antioxidantien, Flammschutzmittel, UV-Stabilisatoren, Thermostabilisatoren oder Pigmente zugegeben werden.

Die erfindungsgemäßen Copolyamide zeichnen sich durch eine sehr gute Transparenz, eine hohe Glasübergangstemperatur und damit eine hohe Temperaturbeständigkeit, eine sehr gute Verarbeitbarkeit und durch gute mechanische Eigenschaften wie Schlagzähigkeit oder Kerbschlagzähigkeit aus. Die Glasübergangstemperatur wird mit Differential Scanning Calorimetry (DSC) ermittelt.

Die Erfindung wird durch nachfolgende Beispiele erläutert.

## Beispiel 1

In einem 20-l-Stahlautoklaven mit Wendelrührer werden 3,55 kg (18,02 Mol) Laurinlactam, 2,99 kg (18,02 Mol) Isophthalsäure, 1,92 kg (11,27 Mol) Isophorondiamin, 1,53 kg (7,29 Mol) Bis-(4-amino-cyclohexyl)-methan, 2,7 kg vollentsalztes Wasser und 3,54 g $H_3PO_4$ in einer Stickstoffatmosphäre aufgeschmolzen und unter Rühren und unter dem sich einstellenden Eigendruck (ca. 20 bar) auf 210 bis 220°C aufgeheizt. Die Mischung wird unter diesen Bedingungen 3 Stunden vorkondensiert. Anschließend wird die Temperatur innerhalb einer Stunde auf 270°C erhöht, wobei der Autoklavendruck unter kontinuierlichem Entspannen auf 20 bar gehalten wird. Unter den Bedingungen 270°C Innentemperatur/20 bar Druck wird 5 Stunden polykondensiert. Dann wird langsam entspannt, auf 280 bis 290°C erhitzt und unter Überleiten von Stickstoff eine Stunde zu Ende polykondensiert. Das entstandene, fast farblose Polyamid wird über eine Düse in ein Wasserbad ausgefahren, wobei es zu einem glasklaren Strang erstarrt, der granuliert und getrocknet wird.

Die Eigenschaften des Polyamids sind in der Tabelle zusammengestellt.

Beispiel 2

In einem 20-l-Stahlautoklaven mit Wendelrührer werden 3,19 kg (16,19 Mol) Laurinlactam, 3,29 kg (19,82 Mol) Isophthalsäure, 2,46 kg (14,45 Mol) Isophorondiamin, 1,26 kg (6,0 Mol) Bis-(4-amino-cyclohexyl)-methan, 2,0 kg vollentsalztes Wasser und 3,54 g $H_3PO_4$ in einer Stickstoffatmosphäre aufgeschmolzen und unter Rühren und unter dem sich einstellenden Eigendruck (ca. 20 bar) auf 210 bis 220° C aufgeheizt. Die Mischung wird unter diesen Bedingungen 3 Stunden vorkondensiert. Anschließend wird die Autoklaventemperatur innerhalb einer Stunde auf 270° C erhöht, wobei der Autoklavendruck unter kontinuierlicher Entspannung auf 20 bar gehalten wird. Unter den Bedingungen 270° C Innentemperatur/20 bar Druck wird 5 Stunden polykondensiert. Dann wird langsam entspannt, auf 280 bis 290° C erhitzt und unter Überleiten von Stickstoff eine Stunde zu Ende polykondensiert. Das entstandene fast farblose Polyamid wird über eine Düse in ein Wasserbad ausgefahren, wobei es zu einem glasklaren Strang erstarrt, der granuliert und getrocknet wird.

Die Eigenschaften des Polyamids sind in der Tabelle zusammengestellt.

Beispiel 3

Beispiel 1 wurde wiederholt, wobei anstelle von 1,53 kg (=7,29 Mol) Bis-(4-amino-cyclohexyl)-methan 1,73 kg (=7,29 Mol) Bis-(4-amino-3-methyl-cyclohexyl)-methan eingesetzt wurden.

Die Eigenschaften des hergestellten transparenten Polyamids sind in der Tabelle zusammengestellt.

Beispiel 4

Beispiel 2 wurde wiederholt, wobei anstelle von 1,26 kg (=6 Mol) Bis-(4-amino-cyclohexyl)-methan 1,43 kg (=6 Mol) 2,2-Bis-(4-amino-cyclohexyl)-propan eingesetzt wurden.

Die Eigenschaften des hergestellten transparenten Polyamids sind in der Tabelle zusammengestellt.

Vergleichsbeispiel A

Beispiel 1 wurde wiederholt, wobei anstelle von 1,53 kg (=7,29 Mol) Bis-(4-amino-cyclohexyl)-methan 0,85 kg (=7,29 Mol) Hexamethylendiamin eingesetzt wurden.

Die Eigenschaften des hergestellten transparenten Polyamids sind in der Tabelle zusammengestellt.

Vergleichsbeispiel B

Beispiel 2 wurde wiederholt, wobei anstelle von 1,26 kg (=6 Mol) Bis-(4-amino-cyclohexyl)-methan 0,7 kg (=6 Mol) Hexamethylendiamin eingesetzt wurden.

Die Eigenschaften des hergestellten transparenten Polyamids sind in der Tabelle zusammengestellt.

Vergleichsbeispiel C

In einem 20-l-Stahlautoklaven mit Wendelrührer werden 3,55 kg (18,02 Mol) Laurinlactam, 2,99 kg (18,02 Mol) Isophthalsäure, 3,16 kg (18,56 Mol) Isophorondiamin, 2,7 kg vollentsalztes Wasser und 3,54 g $H_3PO_4$ in einer Stickstoffatmosphäre aufgeschmolzen und unter Rühren und unter dem sich einstellenden Eigendruck (ca. 20 bar) auf 210 bis 220° C aufgeheizt. Die Mischung wird unter diesen Bedingungen 3 Stunden vorkondensiert. Anschließend wird die Temperatur innerhalb einer Stunde auf 270° C erhöht, wobei der Autoklavendruck unter kontinuierlichem Entspannen auf 20 bar gehalten wird. Unter den Bedingungen 270° C Innentemperatur und 20 bar Druck wird 5 Stunden polykondensiert. Dann wird langsam entspannt, auf 280 bis 290° C erhitzt und unter Überleiten von Stickstoff zu Ende polykondensiert. Dabei wurde nach jeweils 30 Minuten eine Polyamid-Probe aus dem Autoklaven ausgefahren und deren relative Lösungsviskosität in m-Kresol bei 25° C (Konzentration 0,5 g/100 ml) bestimmt.

| Polykondensationszeit (min) | Rel. Lösungsviskosität | Farbe |
|---|---|---|
| 30 | 1,25 | hellgelb |
| 60 | 1,28 | hellgelb |
| 90 | 1,30 | hellgelb |
| 120 | 1,31 | hellgelb |
| 150 | 1,29 | grünlich-gelb |
| 180 | 1,29 | grünlich-gelb |
| 210 | 1,28 | gelb |
| 240 | 1,25 | gelb |
| 270 | 1,25 | braungelb |
| 300 | 1,23 | braungelb |

Keines der Produkte kann zu einem Strang ausgefahren und granuliert werden.

Dieses Vergleichsbeispiel macht deutlich, daß mit Isophorondiamin als alleiniger Diaminkomponente auch bei drastischer Verlängerung der Polykondensationszeit keine hochmolekularen transparenten Polyamide herzustellen sind.

| | $\eta_{rel}$ | Tg °C*) | Schlagzähigkeit DIN 53 433 | Kerbschlagzähigkeit DIN 54 453 [kg/m²] |
|---|---|---|---|---|
| Beispiel | | | | |
| 1 | 1,61 | 149 | kein Bruch | 6,1 |
| 2 | 1,65 | 159 | kein Bruch | 6,5 |
| 3 | 1,68 | 158 | kein Bruch | 5,8 |
| 4 | 1,59 | 161 | kein Bruch | 5,7 |
| Vergleichsbeispiel | | | | |
| A | 1,64 | 106 | kein Bruch | 4,1 |
| B | 1,66 | 128 | kein Bruch | 4,6 |
| C | 1,23 | 147 | nicht verarbeitbar | |

*) Glasübergangstemperatur, ermittelt mit Differential Scanning Calorimetry (DSC).

**Patentansprüche**

1. Transparente, hochmolekulare Copolyamide mit hoher Glasübergangstemperatur auf der Basis von Lactamen, bzw. ω-Aminocarbonsäuren, Terephthalsäure und/oder Isophthalsäure bzw. deren Estern oder esterbildenden Derivaten und Diamingemischen bestehend aus

A) 25 bis 60 Mol-% mindestens einer ω-Aminocarbonsäure bzw. deren Lactamen mit mindestens 11 Kohlenstoffatomen und
B) 40 bis 75 Mol-% einer äquivalenten Mischung aus Terephthalsäure und/oder Isophthalsäure und einem Diamingemisch aus 80 bis 50 Mol-%, bezogen auf die Diamine, Isophorondiamin und entsprechend 20 bis 50 Mol-% Diaminen der allgemeinen Formel

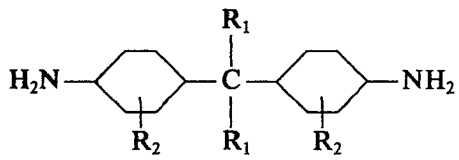

in der $R_1$ und $R_2$ Wasserstoffatome oder Alkylreste mit 1 bis 4 Kohlenstoffatomen darstellen, wobei die Summe A + B sich zu 100 Mol-% ergänzt.

2. Transparente hochmolekulare Copolyamide mit hoher Glasübergangstemperatur bestehend aus

A) 30 bis 50 Mol-% mindestens einer ω-Aminocarbonsäure bzw. deren Lactamen mit 11 Kohlenstoffatomen und
B) 50 bis 70 Mol-% einer äquivalenten Mischung aus Terephthalsäure und/oder Isophthalsäure und einem Diamingemisch aus 80 bis 50 Mol-%, bezogen auf die Diamine, Isophorondiamin und entsprechend 20 bis 50 Mol-% Diaminen der allgemeinen Formel

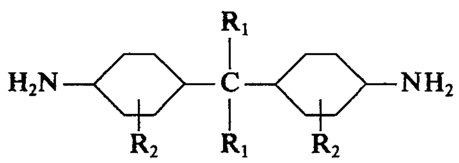

in der $R_1$ und $R_2$ Wasserstoffatome oder Alkylreste mit 1 bis 4 Kohlenstoffatomen darstellen, wobei die Summe A + B sich zu 100 Mol-% ergänzt.

3. Transparente, hochmolekulare Copolyamide mit hoher Glasübergangstemperatur nach den Ansprüchen 1 und 2, dadurch gekennzeichnet, daß sie übliche Zusätze, wie Antioxidantien, Flammschutzmittel, UV-Stabilisatoren, Thermostabilisatoren, Farbstoffe oder Pigmente enthalten.

4. Verwendung der Copolyamide nach den Ansprüchen 1 bis 3 zur Herstellung transparenter, schlagzähiger Formkörper.

**Claims**

1. A transparent, high molecular weight copolyamide having a high glass transition temperature and based on a lactam and/or an ω-aminocarboxylic acid, terephthalic acid and/or isophthalic acid, and/or their esters or ester-forming derivatives, and a diamine mixture, consisting essentially of

(A) 25 to 60 mol% of at least one ω-aminocarboxylic acid, and/or a lactam thereof, having at least 11 carbon atoms, and
(B) 40 to 75 mol% of a stoichiometric mixture of terephthalic and/or isophthalic acid with a diamine mixture composed of 80 to 50 mol%, based on the diamine component, of isophorone diamine and correspondingly 20 to 50 mol% of a diamine of the general formula

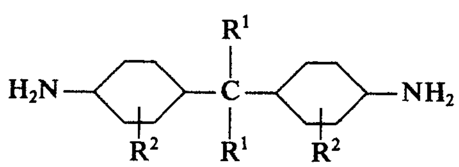

in which $R^1$ and $R^2$ are hydrogen or alkyl of 1 to 4 carbon atoms, the total of A + B amounting to 100 mol%.

2. A transparent, high molecular weight copolyamide having a high glass transition temperature and consisting essentially of

(A) 30 to 50 mol% of at least one ω-aminocarboxylic acid, and/or a lactam thereof, having at least 11 carbon atoms, and
(B) 50 to 70 mol% of a stoichiometric mixture of terephthalic acid and/or isophthalic acid with a diamine mixture composed of 80 to 50 mol%, based on the diamine component, of isophorone diamine and correspondingly 20 to 50 mol% of a diamine of the general formula

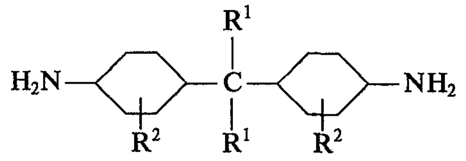

in which $R^1$ and $R^2$ are hydrogen or alkyl of 1 to 4 carbon atoms, the total of A + B amounting to 100 mol%.

3. A transparent, high molecular weight copolyamide having a high glass transition temperature according to claim 1 or 2, characterised in that it contains conventional additives such as antioxidants, flame retardents, UV-stabilisers, heat stabilisers, dyes and pigments.

4. The use of a transparent, high molecular weight copolyamide according to any of claims 1 to 3 for the manufacture of transparent, impact resistant mouldings.

**Revendications**

1. Copolyamides transparentes de poids moléculaire élevé, ayant une haute température de transition vitreuse, à base de lactames ou d'acides oméga-amino-carboxyliques, d'acide téréphtalique ou d'acide isophtalique ou de leurs esters ou dérivés formateurs d'esters et de mélanges de diamines, comprenant:

A) de 25 à 60 mol% d'au moins un acide oméga-amino-carboxylique ou de lactames de ces acides, contenant au moins 11 atomes de carbone, et
B) de 40 à 75 mol% d'un mélange équivalent d'acide téréphtalique et/ou d'acide isophtalique et d'un mélange de diamines comprenant de 80 à 50 mol%, relativement aux diamines, d'isophorone-diamine et, de façon correspondante, de 20 à 50 mol% de diamines de la formule générale:

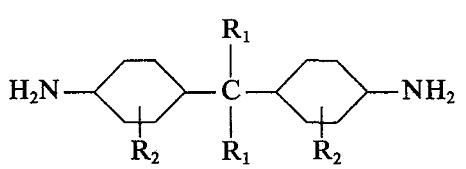

dans laquelle $R_1$ et $R_2$ représentent des atomes d'hydrogène ou des radicaux alkyle contenant de 1 à 4 atomes de carbone, la somme A + B donnant le total de 100 mol%.

2. Copolyamides transparentes de poids moléculaire élevé, ayant une haute température de transistion vitreuse, comprenant:

A) de 30 à 50 mol% d'au moins un acide oméga-amino-carboxylique ou de lactames de ces acides, contenant au moins 11 atomes de carbone, et
B) de 50 à 70 mol% d'un mélange équivalent d'acide téréphtalique et/ou d'acide isophtalique et d'un mélange de diamines comprenant 80 à 50 mol%, relativement aux diamines, d'isophorone-diamine et, de façon correspondante, de 20 à 50 mol% de diamines de la formule générale

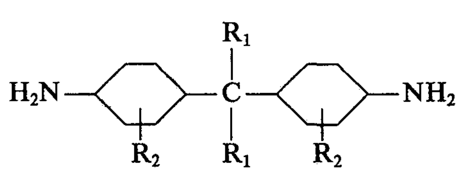

dans laquelle $R_1$ et $R_2$ représentent des atomes d'hydrogène ou des radicaux alkyle contenant de 1 à 4 atomes de carbone, la somme A + B fournissant un total de 100 mol%.

3. Copolyamides transparentes de poids moléculaire élevé, ayant une haute température de transition vitreuse, selon les revendications 1 et 2, caractérisées par le fait qu'elles contiennent des additifs usuels tels que des anti-oxydants, des retardeteurs de combustion, des stabilisants contre les rayons ultra-violets, des thermostabilisants, des colorants ou des pigments.

4. L'utilisation des copolyamides selon les revendications 1 à 3 pour la fabrication de pièces moulées transparentes, résistant au choc.